# FASCICULE DE BREVET EUROPEEN

(11) **EP 3 956 720 B1**
(45) Date de publication et mention de la délivrance du brevet: **30.09.2026**
(21) Numéro de dépôt: 20719610.6
(22) Date de dépôt: 15.04.2020
(51) Int. Cl.: G02C 7/04, G02B 27/00, G02B 27/01, G06F 3/01

(54) **LENTILLE DE CONTACT POUR LE POINTAGE AUTOMATIQUE DE LA DIRECTION D'UN OEIL D'UN INDIVIDU, SYSTÈME DE DÉTECTION ASSOCIÉ**
KONTAKTLINSE ZUM AUTOMATISCHEN ZIELEN IN RICHTUNG EINES AUGES EINER PERSON, ZUGEHÖRIGES DETEKTIONSSYSTEM
CONTACT LENS FOR AUTOMATICALLY AIMING IN THE DIRECTION OF AN EYE OF A PERSON, ASSOCIATED DETECTION SYSTEM

(30) Priorité: 15.04.2019 FR 1903979
(43) Date de publication de la demande: 23.02.2022
(73) Titulaire: Institut Mines Telecom, 91120 Palaiseau (FR)
(72) Inventeur: DE BOUGRENET, Jean-Louis, 29820 Guilers (FR); NOURRIT, Vincent, 29200 Brest (FR); LAHUEC, Cyril, 29810 Lampaul Plouarzel (FR); SEGUIN, Fabrice, 29600 Morlaix (FR); FERRANTI, Francesco, 29200 Brest (FR); DJENIZIAN, Thierry, 13390 Auriol (FR)
(74) Mandataire: Ipsilon
(86) Numéro de dépôt international: PCT/EP2020/060541
(87) Numéro de publication internationale: WO 2020/212394

(56) Documents cités:
- US-A1- 2017 337 706
- US-A1- 2019 033 618
- US-B2- 8 446 341
- BUCHBERGER GERDA ET AL: "Transparent, flexible, thin sensor surfaces for passive light-point localization based on two functional polymers", SENSORS AND ACTUATORS A: PHYSICAL, ELSEVIER BV, NL, vol. 239, 13 January 2016 (2016-01-13), pages 70 - 78, XP029415370, ISSN: 0924-4247, DOI: 10.1016/J.SNA.2016.01.007

## Description

### Domaine technique

La présente invention concerne un système automatique de détection de la direction du regard d'un individu, le système comprenant une lentille de contact.

La lentille est un système complètement autonome et embarqué sur au moins un œil d'un individu.

L'invention vise en particulier à détecter de manière automatique la direction du regard d'un individu.

Le dispositif de détection du regard associé avec la lentille de contact comprend un support destiné à être positionné de manière fixe par rapport au visage de l'individu et peut être intégré dans une monture, en particulier une monture de lunettes ou être intégré dans un casque de réalité augmentée ou virtuelle ou bien encore un écran d'affichage tête haute (HUD acronyme anglais pour « *Head Up Display* »).

Les applications de la présente invention sont nombreuses parmi lesquelles on peut citer : assistance au geste chirurgical, assistance à la conduite, interface homme-machine, analyse de l'attention et de la fatigue du sujet, conception de nouvelles interfaces homme/machine : domotique, aide à la personne (communication avec patients atteints de Locked-In Syndrome par exemple), aide à la vision pour les malvoyants, etc.

### Technique antérieure

La matérialisation du pointage de la direction du regard d'un individu est devenue une opération indispensable lors de l'utilisation, par exemple, de casques de réalité augmentée ou virtuelle pour lesquels il est utile d'évaluer l'attention ou la charge cognitive ou de valider une opération en la désignant par le regard : [1] et [2].

Peu de solutions sont connues : on peut citer ici le brevet US5345281A et la demande de brevet US2017/371184A1.

En revanche, les dispositifs de détection de matérialisation d'un faisceau lumineux s'adaptant à leur forme, longueur d'onde, et tout autre paramètre physique les caractérisant, sont très nombreux.

Le brevet US8446341B2 propose une solution intéressante de pointage et de détection automatique de la direction du regard d'un individu, dans laquelle il est prévu une lentille de contact qui intègre en son sein une seule diode électroluminescente en regard de la cornée et en outre des biocapteurs sur la périphérie de la lentille. La diode unique et le détecteur de direction décrit ainsi que leur agencement permettent certes de visualiser la position du regard de l'individu mais pas de calculer avec précision la direction de l'œil. Cela s'explique par le fait que le but visé par ce brevet est l'activation d'un appareillage externe (e.g. TV ou autre), ce qui implique qu'il ne nécessite pas une extraction précise de la direction du regard et en particulier le point de fixation (point de vergence).

US 2017/337706 A1 décrit un système de suivi du regard comprenant une lentille de contact avec un repère de position, un photodétecteur pour recevoir un signal issu du repère, un élément de conditionnement lumineux et des composants électroniques.

Il existe donc un besoin d'améliorer les systèmes de pointage, lorsqu'ils servent à extraire précisément la direction du regard et de la fixation impliquant la vergence, et les systèmes afférents de détection automatiques de la direction d'un regard d'un individu, notamment en s'affranchissant des inconvénients précités.

Le but de l'invention est de répondre au moins en partie à ce besoin.

### Exposé de l'invention

Pour ce faire, l'invention comprend une lentille de contact, destinée à être portée par un œil de l'individu, pour le pointage automatique de la direction de l'œil, comprenant :
- une membrane adaptée pour recouvrir la pupille et l'iris de l'œil et de préférence au moins partiellement la scléra;
- au moins deux sources d'illumination encapsulées dans le substrat, adaptées chacune pour émettre un cône ou faisceau lumineux dont la divergence est contrôlée par rapport à l'axe de la lentille ;
- au moins une interface de collecte et d'alimentation en énergie électrique des sources d'illumination, depuis l'extérieur de la lentille;
- au moins un circuit électronique adapté pour activer les sources à partir de l'interface.

Par « divergence contrôlée », on entend ici et dans le cadre de l'invention le sens usuel, à savoir le fait que la divergence d'un cône ou faisceau d'éclairage, en particulier dans le cas d'une diode laser, est maitrisée par des moyens connus de l'homme de l'art. En particulier, pour une diode laser, cela signifie que son faisceau est émis avec un très faible angle de divergence.

Selon un mode de réalisation avantageux, la lentille de contact comprend une batterie encapsulée dans la membrane et reliée à l'interface, la batterie étant adaptée pour être rechargée depuis l'interface et pour alimenter électriquement les sources d'illumination et/ou les fonctions optoélectroniques associées aux sources d'illumination, le circuit électronique étant adapté pour activer les sources à partir de la batterie.

Les sources d'illumination peuvent émettre dans l'infra-rouge ou le visible.

Les sources d'illumination sont de préférence des diodes électroluminescentes (DEL) ou des lasers à cavité verticale à émission par la surface (VCSEL) ou des diodes lasers à émission par la tranche.

De préférence, les diodes DEL ou VCSEL sont munies chacune d'une optique de mise en forme de leur faisceau.

Selon une variante de réalisation avantageuse, l'interface comprend une antenne adaptée pour le transfert d'énergie par induction électromagnétique, et un redresseur relié à l'antenne pour transférer tout ou partie de l'énergie reçue par l'antenne aux sources, et le cas échéant à la batterie et/ou aux autres fonctions optoélectroniques encapsulées dans la membrane. Le transfert d'énergie à distance par induction, notamment en vue d'une recharge de la batterie, est avantageux car il peut se faire aisément et rapidement sans connexion externe, au moyen d'une antenne intégrée dans le support (monture de lunettes, casque à réalité augmentée) que l'on va utiliser pour la détection des faisceaux des sources d'illumination.

De préférence, le redresseur est adapté pour transférer tout ou partie de l'énergie reçue par induction directement aux sources d'illumination.

Selon une variante avantageuse, l'antenne peut être adaptée pour la transmission de données sans fil, notamment par radiofréquences (RF).

Avantageusement, au moins une des deux sources d'illumination est mise en œuvre en tant que partie d'un système de communication.

Avantageusement, la batterie est un accumulateur déformable, encapsulé dans la membrane. Il peut s'agir d'un accumulateur décrit et revendiqué dans la demande de brevet WO 2018/167393 A1. Un tel accumulateur a pour avantage d'être de dimensions très réduites, typiquement d'une surface de l'ordre de 0,75cm². Cette batterie souple a également pour caractéristiques avantageuses d'être étirable et autoréparable de façon à être intégrée au mieux dans la lentille de contact et, de pouvoir assurer une autonomie suffisante pour le fonctionnement des sources d'illumination.

La lentille de contact est de préférence une lentille sclérale rigide ou hybride (semi-rigide). Une lentille sclérale présente l'avantage d'être plus stable sur l'œil qu'une lentille de contact classique, ce qui est avantageux pour un tel dispositif embarqué sur l'œil. Une lentille sclérale offre une surface utile plus grande.

L'invention a pour objet un système automatique de détection de la direction du regard d'un individu comprenant au moins une lentille de contact telle que décrite précédemment. Il s'agit donc d'un système qui va détecter automatiquement, i.e. une fois programmé sans intervention humaine, la direction du regard d'un individu.

De préférence, le système comprend deux lentilles de contact décrites précédemment, l'une étant dédiée à l'œil droit, l'autre à l'œil gauche de l'individu.

Selon un système comparatif non revendiqué, le système fonctionne sans autre élément que la matérialisation dans l'espace des faisceaux générés par les sources d'illumination de la lentille de contact, qui matérialisent la direction du regard dans l'espace.

Selon l'invention, la lentille de contact est couplée à une caméra ou à un détecteur sensible à position (PSD acronyme anglo-saxon pour « Position Sensitive Detector) disposé en face de l'œil, ce qui permet l'extraction de l'angle de déviation par rapport à la normale du regard.

Le système comprend en outre :
- un support, destiné à être positionné de manière fixe par rapport au visage de l'individu ;
- au moins une caméra ou un détecteur sensible à la position (PSD), solidaire du support, le(s) détecteur(s) étant adapté(s) pour détecter la position du/des faisceaux issu(s) des au moins deux sources d'illumination de la lentille de contact de sorte à en extraire l'angle de déviation par rapport à la normale du regard.

La mise en œuvre d'un PSD a pour avantage d'être plus simple, moins coûteuse et plus précise.

Le support du PSD peut être une monture, destinée à être portée sur le visage de l'individu, telle qu'une monture de lunette ou un casque de réalité augmentée ou d'un écran d'affichage tête haute (HUD).

Selon une première variante, le système comprend un unique détecteur PSD, destiné à être agencé en regard de l'œil, le détecteur PSD étant transparent dans le visible et sensible dans le proche infrarouge (PIR), les sources d'illumination de la lentille de contact émettant dans le proche infrarouge.

Selon une deuxième variante, le système comprend deux détecteurs PSD, destinés à être agencés à la périphérie de l'œil, sensiblement dans un plan face à l'œil, de sorte à couvrir la gamme de variation angulaire de position de l'œil, les détecteurs PSD étant agencés afin de ne pas obstruer la vision de l'individu.

Ainsi, l'invention embarque sur une lentille de contact, aux moins deux sources d'émission optique dont on contrôle pour chacune la divergence du faisceau visible ou non, émanant de la lentille de contact de manière à matérialiser la direction du regard, par un ou plusieurs faisceaux optiques.

On intègre dans la lentille de contact les fonctions nécessaires au fonctionnement des sources lumineuses, comme une batterie flexible et son interface de rechargement ainsi que l'électronique nécessaire au fonctionnement.

Selon un système comparatif non revendiqué, une lentille de contact peut mettre en œuvre la détection de la direction du regard dans l'espace par elle seule, c'est-à-dire qu'il n'y a pas de nécessité d'un autre composant pour la matérialisation dans l'espace des faisceaux générés par les sources optiques de la lentille de contact.

Selon l'invention, pour laquelle la détection des faisceaux est utile, on dispose devant l'œil, en utilisant par exemple le support d'une monture de lunette ou d'un casque réalité augmentée, au moins un détecteur sensible à la position (PSD) des faisceaux, ce qui permet l'extraction de l'angle d'inclinaison de l'œil par rapport à cette lunette ou ce casque et donc par rapport à la normale du regard. On pourra se reporter à la publication [3] pour un fonctionnement d'un PSD.

Le système peut fonctionner, comme un système d'identification et de pointage par une télécommande, où la télécommande est selon l'invention remplacée directement par l'œil d'un individu équipé de la lentille de contact intégrant les sources lumineuses directives. Le choix du matériau pour le ou les détecteurs PSD dépend de la longueur d'onde choisie et si l'on souhaite mettre en œuvre des sources lumineuses à émission dans le visible ou pas. Dans le cas où l'on ne souhaite pas rendre visible les faisceaux lumineux, mais pouvoir cependant le détecter, le choix du PSD, lorsqu'il est disposé devant l'œil, imposera une transparence dans le visible [4]. En revanche, ce choix impose une absorption dans le proche infrarouge, ce qui conduit à optimiser le matériau du PSD en conséquence.

Une autre solution pour la détection par PSD consiste à disposer la zone photosensible en périphérie de l'axe optique laissé libre.

A l'inverse de la lentille de contact selon le brevet US8446341B2, qui permet uniquement de visualiser la position du regard, la solution selon l'invention permet de la calculer. En effet, avec un détecteur PSD proche de l'œil pour en minimiser la taille, et qui n'obstrue pas la vue de l'individu qui porte la lentille de contact, il est possible d'appliquer une méthode de calcul permettant une bonne précision sur un domaine angulaire large malgré les émetteurs excentrés (sources de la lentille) par rapport l'axe optique.

D'autres avantages et caractéristiques de l'invention ressortiront mieux à la lecture de la description détaillée d'exemples de mise en œuvre de l'invention faite à titre illustratif et non limitatif en référence aux figures suivantes.

### Brève description des dessins

[Fig 1] est une vue schématique en perspective d'un exemple de lentille de contact seule et placée sur un œil, sans support ni détecteur tels que revendiqués selon l'invention.
[Fig 2] est une reproduction photographique d'une batterie déformable encapsulée dans un substrat du type de celui d'une lentille de contact selon l'invention et surmontée d'une diode électroluminescente.
[Fig 3A] est une vue illustrant une configuration de détection des faisceaux lumineux issus d'une lentille de contact selon l'invention qui éclairent des détecteurs PSD agencés en périphérie d'une zone transparente en regard de la zone de l'iris de l'œil d'un individu.
[Fig 3B] est une autre vue illustrant une configuration de détection des faisceaux lumineux issus d'une lentille de contact selon l'invention qui éclairent des détecteurs PSD agencés en périphérie d'une zone transparente en regard de la zone de l'iris de l'œil d'un individu.
[Fig 4] est une vue synoptique montrant le fonctionnement d'un dispositif de rechargement par induction électromagnétique permettant de recharger la batterie déformable encapsulée dans une lentille de contact selon l'invention.
[Fig 5] est une représentation schématique d'une première configuration de détection des faisceaux lumineux issus d'une lentille de contact selon l'invention.
[Fig 6] est une représentation schématique d'une deuxième configuration de détection des faisceaux lumineux issus d'une lentille de contact selon l'invention.
[Fig 7] montre le principe de la détection de position par mesure des photo-courants résultant de l'éclairage d'un détecteur PSD.
[Fig 8A] illustre de manière schématique une étape de réalisation d'une lentille de contact selon l'invention.
[Fig 8B] illustre de manière schématique une lentille de contact selon l'invention réalisée à partir de l'étape précédente.

### Description détaillée

Par souci de clarté, les mêmes éléments sont désignés par les mêmes références numériques dans les différentes figures.

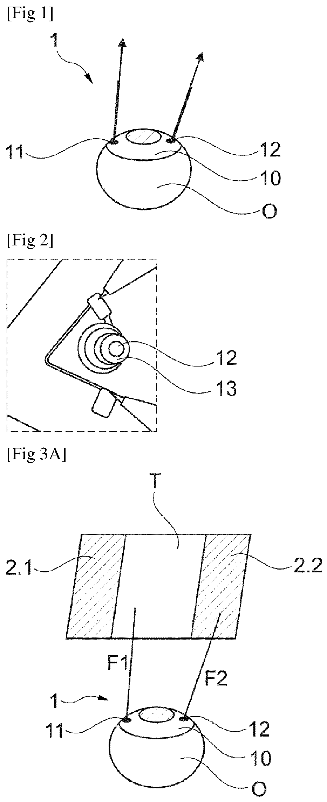

On a représenté à la figure 1, une lentille de contact 1 portée par l'œil (O) d'un individu à proximité du cerclage d'une monture.

La lentille de contact 1, de préférence une lentille sclérale rigide ou hybride, supporte par encapsulation dans sa membrane 10, deux sources d'illumination 11, 12.

Ces sources peuvent être des diodes électroluminescentes (DEL) ou des lasers à cavité verticale émission par la surface (VCSEL acronyme anglo-saxon pour « Vertical-Cavity Surface-Emitting laser ») ou encore des diodes lasers à émission par la tranche. La lumière émise dans l'infrarouge, par ces sources 11, 12 peut être cohérente (VCSEL) ou faiblement cohérente (LED).

Lorsque la lentille de contact 1 est portée par un œil (O) de l'individu, chaque source d'illumination 11, 12 peut émettre un cône ou faisceau d'éclairage F1, F2 destiné ou pas à éclairer une zone d'un détecteur sensible de position, comme détaillé par la suite.

Une forme des sources 11, 12, comme par exemple des diodes de forme elliptique ou la mise en place d'une optique de mise en forme sur chacune des sources peut être envisagée afin que chaque faisceau lumineux soit sous la forme d'un pinceau optique mince dans la zone de détection comme décrit par la suite.

Comme montré en figure 2 en relation avec une LED 12 de couleur orange, la lentille de contact 1 intègre au sein de sa membrane 10 une batterie autonome rechargeable qui alimente la LED 12. Cette batterie est avantageusement un accumulateur déformable tel que décrit et revendiqué dans la demande de brevet WO 2018/167393 A1.

La détection des faisceaux lumineux émis par les sources 11, 12 peut se faire par la lentille de contact 1 à elle seule, ce qui permet de réaliser la détection de la direction du regard dans l'espace.

De manière alternative, dans le cas où la détection des faisceaux est utile, on peut mettre en œuvre un dispositif de détection externe comportant un ou plusieurs détecteurs sensibles à la position (PSD) des faisceaux, ce qui permet l'extraction de l'angle d'inclinaison de l'œil par rapport à cette lunette ou ce casque et donc par rapport à la normale du regard.

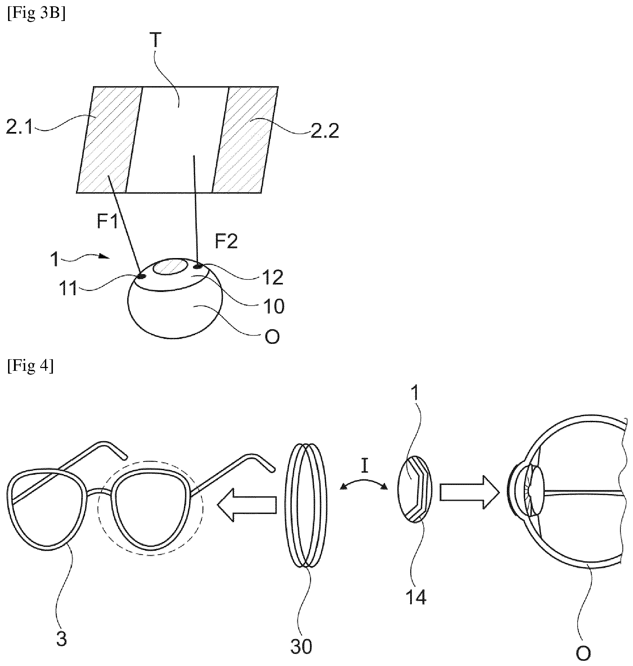

Les figures 3A et 3B montrent des configurations où deux détecteurs PSD 2.1, 2.2 sont agencés de part et d'autre d'une zone transparente T en regard de l'iris de l'œil. Dans le cas de la figure 3A, le faisceau F1 de la source 11 éclaire la zone transparente tandis que le faisceau F2 de la source 12 éclaire la zone sensible de détection 2.2. Dans le cas de la figure 3B, le faisceau F1 de la source 11 éclaire la zone sensible de détection 2.1, tandis que le faisceau F2 de la source 12 éclaire la zone transparente T.

Le ou les détecteurs PSD 2, 2.1, 2.2 peuvent être intégrés dans le support d'une monture de lunette ou d'un casque réalité augmentée,

Les configurations des figures 3A, 3B montrent l'intégration de deux détecteurs 2.1, 2.2 dans un support, tel qu'un casque de réalité augmentée, nécessitant une zone transparente T face à la direction du regard.

Pour le rechargement de la batterie souple 13 intégrée dans la lentille de contact, on prévoit avantageusement un système de rechargement par induction magnétique. Ainsi, de préférence une antenne sous la forme d'une bobine d'induction 14, reliée un redresseur sont encapsulés dans une lentille de contact 1.

Un exemple avantageux de système de rechargement est montré en figure 4 : une antenne d'induction 30 est intégrée dans une monture de lunettes 3, de préférence qui supporte les détecteurs PSD. L'antenne 30 transfère de l'énergie par couplage magnétique à l'antenne 14 de la lentille de contact 1 qui peut être en place sur l'œil (O) d'un individu pendant la recharge par induction magnétique. On pourra se reporter à la publication [6] pour plus de détails.

Pour la détection proprement dite, deux configurations sont envisageables.

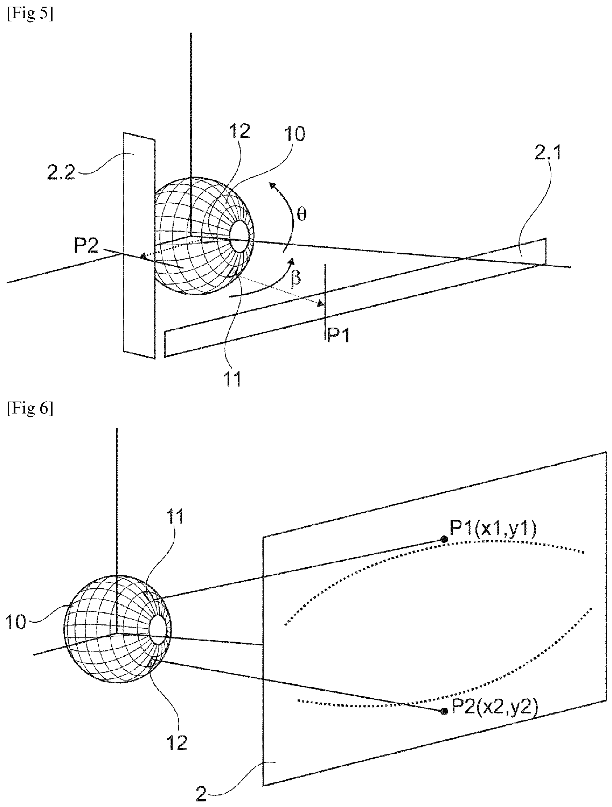

Selon une première configuration (figure 5), deux détecteurs PSD 2.1, 2 .2 sont placés devant l'œil. Un agencement privilégié prévoit que le détecteur 2.1 est dans une localisation inférieure de la lentille de contact 1, tandis que l'autre détecteur 2.2, sensiblement à 90° du détecteur 2.1 est le plus proche possible de la paroi nasale et ce afin de ne pas obstruer la vision.

Les faisceaux des deux sources 11, 12 sont dirigés respectivement vers les détecteurs 2.1, 2.2.

Si l'œil pivote, chaque faisceau intercepte toujours les PSD puisque la position P1/P2 donnée par les détecteurs 2.1, 2.2 ne change pas avec une rotation θ/β.

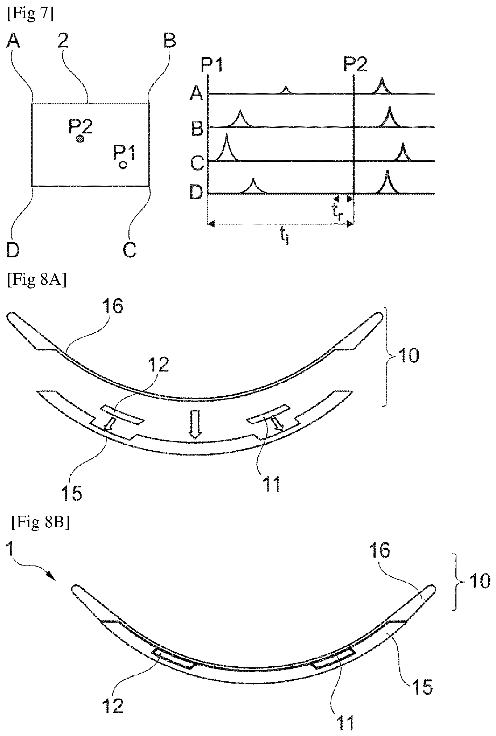

Dans une deuxième configuration (figure 6), un seul détecteur PSD 2 est placé devant l'œil. La position de chaque faisceau des deux sources 11, 12 sur le détecteur 2 permet de remonter à la direction du regard de l'individu. Les sources 11, 12 n'étant pas orientées perpendiculairement au détecteur PSD 2, il y a une zone au centre de ce dernier, symbolisée en pointillés sur la figure 6, qui ne sera pas éclairée et qui pourrait être entièrement vide. Le fonctionnement d'un détecteur PSD 2 est montré en figure 7 : chacune des positions P1, P2 des faisceaux émis par les deux sources 11, 12 est traduite en des photo-courants que l'on peut aisément mesurer, comme explicité dans la publication [3].

Les figures 8A et 8B illustrent certaines étapes d'un procédé de réalisation d'une lentille de contact selon l'invention, de type sclérale.

La membrane 10 est ici constituée de deux films 15, 16 en polymère transparent, par exemple un hydrogel.

Chacun des deux films 15, 16 est tout d'abord mis en forme comme usuellement.

Puis, toute l'électronique, à l'exception éventuellement de l'antenne de collecte d'énergie par induction, est mise en place sur la face intérieure du film extérieur 15.

Ainsi, l'électronique dont les sources d'illumination 11, 12 est parfaitement positionnée au sein du film 16.

Une fois, ce positionnement effectué, les deux films 15, 16 en polymère transparent. sont scellés entre eux, par colle UV par exemple.

Ainsi, tous les composants électroniques ou optoélectroniques sont parfaitement positionnés et encapsulés entre les deux films 15, 16.

Bien entendu, l'invention n'est pas limitée aux exemples de mise en œuvre qui viennent d'être décrits.

D'autres variantes et améliorations peuvent être envisagées sans pour autant sortir du cadre de l'invention.

Par exemple, le dispositif de détection des faisceaux des sources émis depuis la lentille de contact peut être intégré dans tout type de support fixe et de préférence dans une monture par exemple un casque de réalité augmentée ou dans un écran d'affichage tête haute (HUD).

D'autres variantes et améliorations peuvent être apportées sans pour autant sortir du cadre de l'invention.

L'invention est définie par les revendications annexes et n'est pas limitée aux exemples qui viennent d'être décrits ; on peut notamment combiner entre elles des caractéristiques des exemples illustrés au sein de variantes non illustrées.

### Liste des documents cités

1: N. M. Farandos et al., « Contact lens sensors in ocular diagnostics », Advanced Healthcare Materials, vol. 4, no. 6, 4, pp. 792-810, April 2015.
2: Z. Blum, D. Pankratov & S. Shleev (2014). « Powering electronic contact lenses: current achievements, challenges, and perspectives ». Expert Review of Ophthalmology 9(4).
3: S. Cui, Y.C. Soh, « Linearity indices and linearity improvement of 2-D tetra-lateral position sensitive detector ». IEEE Transactions on Electron Devices, Vol. 57, pp. 2310-2316, 2010.
4: G. Buchberger et al., « Transparent, flexible, thin sensor surfaces for passive light-point localization based on two functional polymers », Sensors and Actuators A : Physical, A239, pp. 70-78, 2016.
5: Electro-optics, December 2018, January 2019, pp.11.
6: Y.-J.Kim et al., « Eyeglasses-powered, contact lens-like platform with high power transfer efficiency, » Biomedical Microdevices, vol. 17, no. 4, July 2015.

## Revendications

1. Système automatique de détection de la direction du regard d'un individu comprenant :
- au moins une lentille de contact (1), destinée à être portée par un œil de l'individu, pour le pointage automatique de la direction de l'œil, la lentille de contact comprenant :
• une membrane (10) adaptée pour recouvrir la pupille et l'iris de l'œil et de préférence au moins partiellement la scléra ;
• au moins deux sources d'illumination (11, 12) encapsulées dans la membrane, adaptées chacune pour émettre un cône ou faisceau lumineux (F1, F2) dont la divergence est contrôlée par rapport à l'axe de la lentille;
• au moins une interface (14) de collecte et d'alimentation en énergie électrique des sources d'illumination, depuis l'extérieur de la lentille;
• au moins un circuit électronique adapté pour activer les sources à partir de l'interface ;
- un support (3), destiné à être positionné de manière fixe par rapport au visage de l'individu;
- au moins un détecteur (2) sensible à la position (PSD) ou une caméra, solidaire du support, le détecteur ou la caméra étant adapté pour détecter la position des faisceaux des au moins deux sources d'illumination de la lentille de contact de sorte à en extraire l'angle de déviation par rapport à la normale du regard.

2. Système automatique selon la revendication 1, comprenant deux lentilles de contact, l'une étant dédiée à l'œil droit, l'autre à l'œil gauche de l'individu.

3. Système automatique selon la revendication 1 ou 2, le support étant une monture (3), destinée à être portée sur le visage de l'individu, telle qu'une monture de lunette ou un casque de réalité augmentée ou d'un écran d'affichage tête haute (HUD).

4. Système automatique selon la revendication 3, comprenant un unique détecteur PSD (2), destiné à être agencé en regard de l'œil, le détecteur PSD étant transparent dans le visible et sensible dans le proche infrarouge (PIR), les sources d'illumination de la lentille de contact émettant dans le proche infrarouge.

5. Système automatique selon la revendication 3, comprenant deux détecteurs PSD (2.1, 2.2), destinés à être agencés à la périphérie de l'œil, sensiblement dans un plan face à l'œil, de sorte à couvrir la gamme de variation angulaire de position de l'œil, les détecteurs PSD étant agencés afin de ne pas obstruer la vision de l'individu.

6. Système automatique selon l'une des revendications précédentes, la lentille de contact comprenant une batterie (13) encapsulée dans la membrane et reliée à l'interface, la batterie étant adaptée pour être rechargée depuis l'interface et pour alimenter électriquement les sources d'illumination, le circuit électronique étant adapté pour activer les sources à partir de la batterie.

7. Système automatique selon l'une des revendications précédentes, les sources d'illumination émettant dans l'infra-rouge ou le visible.

8. Système automatique selon l'une des revendications précédentes, les sources d'illumination étant des diodes électroluminescentes (DEL) ou des lasers à cavité verticale à émission par la surface (VCSEL); ou des diodes lasers à émission par la tranche.

9. Système automatique selon la revendication 8, les diodes DEL ou VCSEL étant munies chacune d'une optique de mise en forme de leur faisceau.

10. Système automatique selon l'une des revendications précédentes, l'interface comprenant une antenne (14) adaptée pour le transfert d'énergie par induction électromagnétique, et un redresseur relié à l'antenne pour transférer tout ou partie de l'énergie reçue par l'antenne aux sources, et le cas échéant à la batterie le redresseur étant de préférence adapté pour transférer tout ou partie de l'énergie reçue par induction directement aux sources d'illumination, l'antenne étant de préférence adaptée pour la transmission de données sans fil, notamment par radiofréquences (RF).

11. Système automatique selon l'une des revendications précédentes, au moins une des deux sources d'illumination étant mise en œuvre en tant que partie d'un système de communication.

12. Système automatique selon l'une des revendications précédentes, la batterie étant un accumulateur déformable, encapsulé dans la membrane.

13. Système automatique selon l'une des revendications précédentes, la membrane étant constituée de deux films (15, 16) en polymère transparent scellés entre eux, l'un des films supportant avant scellement les sources d'illumination, au moins une partie de l'interface et le circuit électronique et le cas échéant la batterie.

14. Système automatique selon l'une des revendications précédentes, la lentille de contact étant une lentille sclérale rigide ou hybride.

## Patentansprüche

1. Automatisches System zur Detektion der Blickrichtung einer Person, umfassend:
- mindestens eine Kontaktlinse (1), die dazu bestimmt ist, von einem Auge der Person getragen zu werden, zur automatischen Erfassung der Richtung des Auges, wobei die Kontaktlinse umfasst:
• eine Membran (10), die dazu eingerichtet ist, die Pupille und die Iris des Auges und vorzugsweise wenigstens teilweise die Sklera zu bedecken;
• mindestens zwei Lichtquellen (11, 12), die in der Membran eingekapselt sind und jeweils dazu eingerichtet sind, einen Lichtkegel oder ein Lichtbündel (F1, F2) auszusenden, dessen Divergenz bezüglich der Achse der Linse kontrolliert wird;
• mindestens eine Schnittstelle (14) zum Sammeln und zur Versorgung der Lichtquellen mit Strom von außerhalb der Linse;
• mindestens eine elektronische Schaltung, die dazu eingerichtet ist, die Quellen von der Schnittstelle aus zu aktivieren;
- eine Halterung (3), die dazu bestimmt ist, fest bezüglich des Gesichts der Person positioniert zu werden;
- mindestens einen positionsempfindlichen (PSD) Detektor (2) oder eine Kamera, die mit der Halterung fest verbunden ist, wobei der Detektor oder die Kamera dazu eingerichtet ist, die Position der Bündel der mindestens zwei Lichtquellen der Kontaktlinse zu erfassen, um daraus den Abweichungswinkel bezüglich der Blicknormalen abzuleiten.

2. Automatisches System nach Anspruch 1, welches zwei Kontaktlinsen umfasst, wobei eine für das rechte Auge und die andere für das linke Auge der Person bestimmt ist.

3. Automatisches System nach Anspruch 1 oder 2, wobei die Halterung ein Gestell (3) ist, das dazu bestimmt ist, auf dem Gesicht der Person getragen zu werden, wie etwa ein Brillengestell oder ein Augmented-Reality-Headset oder ein Head-up-Display (HUD).

4. Automatisches System nach Anspruch 3, welches einen einzigen PSD-Detektor (2) umfasst, der dazu bestimmt ist, gegenüber dem Auge angeordnet zu werden, wobei der PSD-Detektor durchsichtig im sichtbaren Licht und empfindlich im nahen Infrarotbereich (NIR) ist, wobei die Lichtquellen der Kontaktlinse im nahen Infrarotbereich emittieren.

5. Automatisches System nach Anspruch 3, welches zwei PSD-Detektoren (2.1, 2.2) umfasst, die dazu bestimmt sind, an der Peripherie des Auges angeordnet zu werden, im Wesentlichen in einer Ebene gegenüber dem Auge, so dass sie den Änderungsbereich der Winkelposition des Auges abdecken, wobei die PSD-Detektoren so angeordnet sind, dass sie die Sicht der Person nicht behindern.

6. Automatisches System nach einem der vorhergehenden Ansprüche, wobei die Kontaktlinse eine Batterie (13) umfasst, die in der Membran eingekapselt und mit der Schnittstelle verbunden ist, wobei die Batterie dazu eingerichtet ist, von der Schnittstelle aus wieder aufgeladen zu werden und die Lichtquellen mit Strom zu versorgen, wobei die elektronische Schaltung dazu eingerichtet ist, die Quellen von der Batterie aus zu aktivieren.

7. Automatisches System nach einem der vorhergehenden Ansprüche, wobei die Lichtquellen im Infrarotbereich oder sichtbaren Bereich emittieren.

8. Automatisches System nach einem der vorhergehenden Ansprüche, wobei die Lichtquellen Elektrolumineszenzdioden (LEDs) oder Oberflächenemitter (VCSEL) sind; oder kantenemittierende Laserdioden.

9. Automatisches System nach Anspruch 8, wobei die Dioden LED oder VCSEL jeweils mit einer Optik zur Formgebung ihres Bündels ausgestattet sind.

10. Automatisches System nach einem der vorhergehenden Ansprüche, wobei die Schnittstelle eine Antenne (14) umfasst, die für die Energieübertragung durch elektromagnetische Induktion eingerichtet ist, und einen Gleichrichter, der mit der Antenne verbunden ist, um die gesamte über die Antenne empfangene Energie oder einen Teil davon an die Quellen und gegebenenfalls an die Batterie zu übertragen, wobei der Gleichrichter vorzugsweise dazu eingerichtet ist, die gesamte durch Induktion empfangene Energie oder einen Teil davon direkt an die Lichtquellen zu übertragen, wobei die Antenne vorzugsweise für die drahtlose Datenübertragung eingerichtet ist, insbesondere durch Funkübertragung (RF).

11. Automatisches System nach einem der vorhergehenden Ansprüche, wobei mindestens eine der zwei Lichtquellen als Teil eines Kommunikationssystems implementiert ist.

12. Automatisches System nach einem der vorhergehenden Ansprüche, wobei die Batterie ein verformbarer Akkumulator ist, der in der Membran eingekapselt ist.

13. Automatisches System nach einem der vorhergehenden Ansprüche, wobei die Membran aus zwei durchsichtigen Polymerfolien (15, 16) besteht, die miteinander verschweißt sind, wobei eine der Folien vor der Verschweißung die Lichtquellen, wenigstens einen Teil der Schnittstelle und die elektronische Schaltung und gegebenenfalls die Batterie trägt.

14. Automatisches System nach einem der vorhergehenden Ansprüche, wobei die Kontaktlinse eine starre Sklerallinse oder Hybridlinse ist.

## Claims

1. Automatic system for detecting the gaze direction of an individual, comprising:
- at least one contact lens (1), intended to be worn in an eye of the individual, for automatically pointing the direction of the eye, the contact lens comprising:
• a membrane (10) suitable for covering the pupil and iris of the eye and preferably at least partially the sclera;
• at least two illumination sources (11, 12) encapsulated in the membrane, each suitable for emitting a cone or beam of light (F1, F2) the divergence of which is controlled with respect to the axis of the lens;
• at least one interface (14) for collecting electrical energy and supplying it to the illumination sources from outside the lens;
• at least one electronic circuit suitable for activating the sources from the interface;
- a support (3), intended to be positioned fixedly with respect to the face of the individual;
- at least one position-sensitive detector (PSD) (2) or camera, joined integrally to the support, the detector or camera being suitable for detecting the position of the beams from the at least two illumination sources of the contact lens so as to extract therefrom the angle of deviation from the normal of the gaze.

2. Automatic system according to Claim 1, comprising two contact lenses, one dedicated to the right eye and the other dedicated to the left eye of the individual.

3. Automatic system according to Claim 1 or 2, the support being a mount (3) intended to be worn on the face of the individual, such as a spectacle mount or an augmented-reality headset or a head-up display screen (HUD).

4. Automatic system according to Claim 3, comprising a single PSD detector (2), intended to be arranged facing the eye, the PSD detector being transparent in the visible and sensitive in the near-infrared (NIR), the illumination sources of the contact lens emitting in the near-infrared.

5. Automatic system according to Claim 3, comprising two PSD detectors (2.1, 2.2), intended to be arranged at the periphery of the eye, substantially in a plane facing the eye, so as to cover the range of angular variation of the position of the eye, the PSD detectors being arranged so as not to obstruct the vision of the individual.

6. Automatic system according to one of the preceding claims, the contact lens comprising a battery (13) encapsulated in the membrane and connected to the interface, the battery being suitable for being recharged from the interface and for supplying electric power to the illumination sources, the electronic circuit being suitable for activating the sources from the battery.

7. Automatic system according to one of the preceding claims, the illumination sources emitting in the infrared or the visible.

8. Automatic system according to one of the preceding claims, the illumination sources being light-emitting diodes (LED) or vertical-cavity surface-emitting lasers (VCSEL) or edge-emitting laser diodes.

9. Automatic system according to Claim 8, the LEDs or VCSELs each being equipped with optics for shaping their beam.

10. Automatic system according to one of the preceding claims, the interface comprising an antenna (14) suitable for transferring energy by electromagnetic induction, and a rectifier connected to the antenna in order to transfer all or some of the energy received by the antenna to the sources and, where applicable, to the battery, the rectifier preferably being suitable for transferring all or some of the energy received by induction directly to the illumination sources, the antenna preferably being suitable for wireless data transmission, in particular radiofrequency (RF) data transmission.

11. Automatic system according to one of the preceding claims, at least one of the two illumination sources being implemented as part of a communication system.

12. Automatic system according to one of the preceding claims, the battery being a deformable rechargeable battery encapsulated in the membrane.

13. Automatic system according to one of the preceding claims, the membrane being formed of two sealed-together films (15, 16) made of transparent polymer, one of the films supporting, before sealing, the illumination sources, at least part of the interface and the electronic circuit and, where applicable, the battery.

14. Automatic system according to one of the preceding claims, the contact lens being a rigid or hybrid scleral lens.
